Europäisches Patentamt

European Patent Office

Office européen des brevets

(19)

(11) Veröffentlichungsnummer: **0 014 405**

**A1**

(12) ## EUROPÄISCHE PATENTANMELDUNG

(21) Anmeldenummer: **80100419.3**

(22) Anmeldetag: **28.01.80**

(51) Int. Cl.³: **B 60 T 7/20**
**B 60 T 13/08**

(30) Priorität: **02.02.79 DE 2903973**

(43) Veröffentlichungstag der Anmeldung:
**20.08.80 Patentblatt 80/17**

(84) Benannte Vertragsstaaten:
**AT BE FR GB IT NL**

(71) Anmelder: **Josef Peitz Fahrzeugteile**
**Pater Ewald Strasse 29**
**D-4790 Paderborn-Sennelager(DE)**

(72) Erfinder: **Merla, Hubert**
**Meerschlag 20**
**D-4790 Paderborn-Wewer(DE)**

(74) Vertreter: **Loesenbeck, Otto, Dr. et al,**
**Herforder Strasse 17**
**D-4800 Bielefeld 1(DE)**

(54) **Auflaufbremse mit einer zusätzlichen Bremsbetätigungseinrichtung.**

(57) Der nur andeutungsweise gezeigte Anhänger (2) ist mit einer an sich bekannten Auflaufbremsvorrichtung (4) ausgestattet. An der Zuspannvorrichtung (5) der Auflaufbremsvorrichtung (4) ist ein mechanisches Betätigungsorgan (6) angeschlossen, welches schlepperseitig an einem Hebel (12) der hydraulichen Hubeinrichtung (3) des Schleppers (1) befestigt und mit dieser betätigbar ist.

Das mechanische Betätigungsorgan besteht vorzugsweise aus einem Bowdenzug (6). Die Hülse (7) des Bowdenzuges (6) ist an einer auf der Zuspannvorrichtung (5) befestigten Lasche (8) abgestützt. Das Seil (9) des Bowdenzuges (6) ist an einer ortsfest an der Auflaufbremsvorrichtung (4) befestigten weiteren Lasche (10) angeschlossen. Schlepperseitig ist die Hülse (7) an einer am Schlepper (1) befestigten Abstützvorrichtung (11) abgestützt und das Seil (9) an einem Hebel (12) der hydraulischen Hubeinrichtung (3) befestigt.

Durch Betätigen der hydraulischen Hubeinrichtung (3) kann der Anhänger (2) unabhängig vom Wirksamwerden der Auflaufbremsvorrichtung (4) abgebremst werden.

./...

Fig 1

0014405

Pole Bremsenbau

0014405

Josef Peitz Fahrzeugteile, Pater Ewald Str. 29,
4790 Paderborn-Sennelager

BEZEICHNUNG GEÄNDERT,
siehe Titelseite

Fahrzeug-Zug

---

Die vorliegende Erfindung betrifft einen Fahrzeug-Zug, bestehend aus einem mit einer hydraulischen Hubeinrichtung ausgestatteten Schlepper und einem mit einer Auflaufbremsvorrichtung versehenen Anhänger.

Der vorliegenden Erfindung liegt die Aufgabe zugrunde, einen Fahrzeug-Zug der gattungsgemäßen Art so zu gestalten, daß mit einfachsten konstruktiven und fertigungstechnischen Mitteln eine Abbremsung des Anhängers vom Schlepper aus erfolgen kann.

Diese Aufgabe wird nach der Erfindung dadurch gelöst, daß an einer Zuspannvorrichtung der Auflaufbremsvorrichtung ein mechanisches Betätigungsorgan angeschlossen ist, welches andererseits an einem Hebel der hydraulischen Hubeinrichtung des Schleppers angeschlossen und mit dieser betätigbar ist.

Mit der Erfindung wird der Vorteil erzielt, daß eine Abbremsung des Anhängers vom Schlepper aus möglich ist, ohne daß dafür kostspielige oder störanfällige Übertragungselemente erforderlich werden. Es bedarf lediglich der Anbringung eines mechanischen Betätigungsorganes, welches von der hydraulischen Hubeinrichtung des Schleppers betätigt wird.

Nach einem bevorzugten Ausführungsbeispiel der Erfindung besteht das Betätigungsorgan aus einem Bowdenzug.

Weitere Merkmale der Erfindung sind Gegenstand von Unteransprüchen und ergeben sich aus der nachfolgenden Beschreibung der in den beigefügten Zeichnungen dargestellten Ausführungsbeispiele.

Es zeigen:

Fig. 1    eine schematische Darstellung eines Fahrzeug-Zuges, bestehend aus einem Schlepper und einem Anhänger in Seitenansicht,

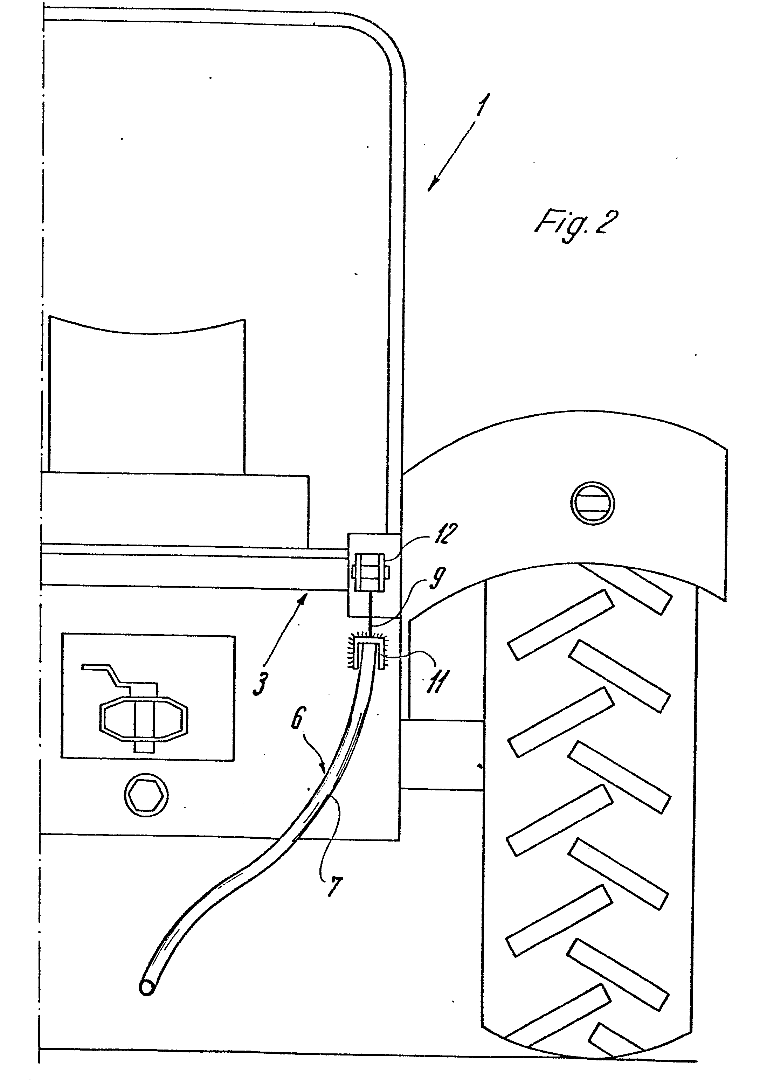

Fig. 2    eine Teilansicht des Schleppers in Richtung des Pfeiles II in Fig. 1, dargestellt ohne Anhänger-Deichsel.

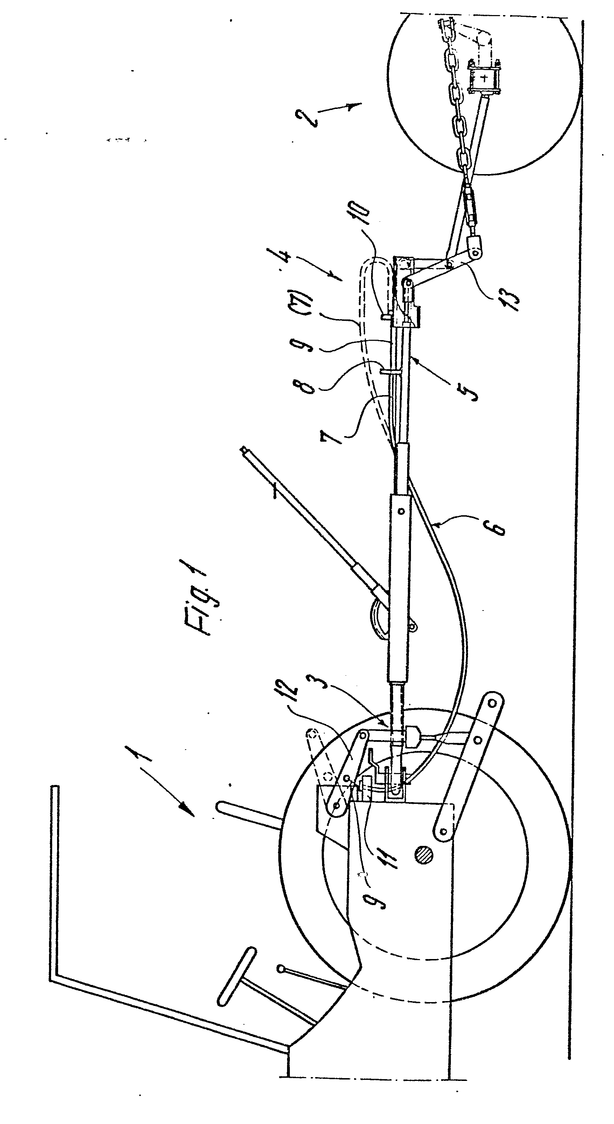

Der in Fig. 1 dargestellte Fahrzeug-Zug besteht aus einem Schlepper 1 und einem andeutungsweise gezeigten Anhänger 2.

Der Schlepper 1 ist mit einer hydraulischen Hubeinrichtung 3 versehen.

Der Anhänger 2 ist mit einer an sich bekannten Auflaufbremsvorrichtung 4 versehen, deren Aufbau und
Wirkungsweise bekannt ist, so daß sich ein näheres
Eingehen auf diese Auflaufbremsvorrichtung 4 erübrigt.

An einer Zuspannvorrichtung 5 der Auflaufbremsvorrichtung 4 ist ein Bowdenzug 6 angeschlossen, dessen
Hülse 7 sich an einer Lasche 8 stützt, die an der
Zuspannvorrichtung 5 befestigt ist. Das Seil 9 des
Bowdenzuges 6 ist an einer ortsfest an der Auflaufbremsvorrichtung 4 befestigten weiteren Lasche 10
befestigt.

Das andere Ende des Bowdenzuges 6 ist bis zum
Schlepper 1 geführt und die Hülse 7 ist dort an
einer Abstützvorrichtung 11 abgestützt, die
schlepperseitig befestigt ist. Das Seil 9 ist an
einem Hebel 12 der Hubeinrichtung 3 angeschlossen.

Wie in Fig. 1 durch strichpunktierte Linien angedeutet ist, kann der Hebel 12 durch Betätigung der
Hubeinrichtung 3 nach oben verschwenkt werden. Dadurch wird im dargestellten Ausführungsbeispiel die
Hülse 7 des Bowdenzuges 6 nach hinten in Richtung
des Anhängers 2 geschoben, wodurch die Zuspannvorrichtung 5 ebenfalls nach hinten in Richtung des Anhängers 2 bewegt wird, wodurch die Bremsen des Anhängers 2 festgestellt werden.

Im vorstehend beschriebenen Ausführungsbeispiel wird
also die Zuspannvorrichtung 5 durch Verschiebung der Hülse 7 des Bowdenzuges 6 betätigt.

In Fig. 1 ist durch strichpunktierte Linien angedeutet, daß die Zuspannvorrichtung 5 auch unmittelbar über das Seil 9 des Bowdenzuges 6 betätigt werden kann, dann nämlich, wenn die Hülse 7 an der ortsfest an der Auflaufbremsvorrichtung 4 befestigten Lasche 10 abgestützt und das Seil 9 an der an der Zuspannvorrichtung 5 befestigten Lasche 8 angreift.

Eine weitere Möglichkeit der Betätigung der Zuspannvorrichtung der Auflaufbremsvorrichtung 4 besteht darin, eine mechanische Betätigungsvorrichtung, vorzugsweise wiederum einen Bowdenzug, direkt an einen Betätigungshebel 13 der Auflaufbremsvorrichtung 4 anzuschließen.

Der Anschluß des Bowdenzuges 6 an der Hubeinrichtung 3 des Schleppers 1 ist selbstverständlich so ausgeführt, daß ein schnelles Lösen des Bowdenzuges 6 beim Abkoppeln des Anhängers 2 vom Schlepper 1 durchführbar ist.

Ein Fahrzeug-Zug gemäß vorliegender Erfindung bietet einerseits einen hohen Bedienungskomfort, da der Anhänger 2 vom Schlepper 1 aus automatisch abgebremst werden kann und andererseits den Vorteil, daß die dafür erforderlichen Vorrichtungen verhältnismäßig billig und störunanfällig sind.

Da durch die Hubeinrichtung 3 des Schleppers 1 beträchtliche Kräfte aufgebracht werden können, ist es sehr empfehlenswert, einen Überlastschutz für die Bremsvorrichtung vorzusehen. Dies kann beispielsweise durch eine Feder erfolgen, die als Kraftbegrenzer die letztendlich auf die Bremstrommeln wirksam werdende Kraft begrenzt, unabhängig davon, mit welcher Kraft die Zuspannvorrichtung 5 vom Schlepper 1 aus zugespannt wird.

Der durch die Betätigung des Bowdenzuges 6 erzielte Verstellweg der Zuspannvorrichtung 5 sollte so gewählt sein, daß eine ausreichend sichere Abbremsung auch bei eingetretenem Verschleiß der Bremsvorrichtung gewährleistet ist.

Patentansprüche
_____

1. Fahrzeug-Zug, bestehend aus einem mit einer
hydraulischen Hubeinrichtung ausgestatteten
Schlepper und einem mit einer Auflaufbremsvorrichtung versehenen Anhänger, d a d u r c h
g e k e n n z e i c h n e t, daß an einer Zuspannvorrichtung (5) der Auflaufbremsvorrichtung (4) ein
mechanisches Betätigungsorgan angeschlossen ist,
welches andererseits an einem Hebel (12) der
hydraulischen Hubeinrichtung (3) des Schleppers (1)
angeschlossen und mit dieser betätigbar ist.

2. Fahrzeug-Zug nach Anspruch 1, dadurch gekennzeichnet, daß das mechanische Betätigungsorgan ein
Bowdenzug (6) ist.

3. Fahrzeug-Zug nach Anspruch 2, dadurch gekennzeichnet, daß die Hülse (7) des Bowdenzuges (6) an
einer auf der Zuspannvorrichtung (5) befestigten
Lasche (8) abgestützt und das Seil (9) des Bowdenzuges (6) an einer ortsfest an der Auflaufbremsvorrichtung (4) befestigten weiteren Lasche (10) angeschlossen ist und daß schlepperartig die Hülse (7)
des Bowdenzuges (6) an einer am Schlepper (1) befestigten Abstützvorrichtung (11) abgestützt und
das Seil (9) am Hebel (12) der hydraulischen Hubeinrichtung (3) angeschlossen ist.

4. Fahrzeug-Zug nach Anspruch 2, dadurch gekennzeichnet, daß die Hülse (7) des Bowdenzuges (6) an einer ortsfest an der Auflaufbremsvorrichtung (4) befestigten Lasche (10) und das Seil (9) an einer an der Zuspannvorrichtung (5) befestigten Lasche (8) angeschlossen ist und daß die Hülse (7) des Bowdenzuges (6) schlepperseitig an einer am Schlepper (1) befestigten Abstützvorrichtung (11) abgestützt und das Seil (9) am Hebel (12) der hydraulischen Hubeinrichtung (3) befestigt ist.

5. Fahrzeug-Zug nach einem der vorhergehenden Ansprüche, dadurch gekennzeichnet, daß der Bowdenzug (6) anhängerseitig an einem Betätigungshebel (13) der Auflaufbremsvorrichtung (4) angeschlossen ist.

6. Fahrzeug-Zug nach einem der vorhergehenden Ansprüche, dadurch gekennzeichnet, daß die Zuspannvorrichtung (5) mit einem Überlastschutz ausgestattet ist, der vorzugsweise aus einer als Kraftbegrenzer dienenden Feder besteht.

Bezugszeichen

| | |
|---|---|
| 1 | Schlepper |
| 2 | Anhänger |
| 3 | Hubeinrichtung |
| 4 | Auflaufbremsvorrichtung |
| 5 | Zuspannvorrichtung |
| 6 | Bowdenzug |
| 7 | Hülse |
| 8 | Lasche |
| 9 | Seil |
| 10 | Lasche |
| 11 | Abstützvorrichtung |
| 12 | Hebel |
| 13 | Betätigungshebel |

Fig. 1

0014405

Fig.2

Peitz Bremsenbau

**Europäisches Patentamt**

## EUROPÄISCHER RECHERCHENBERICHT

EP 80 10 0419

| Kategorie | Kennzeichnung des Dokuments mit Angabe, soweit erforderlich, der maßgeblichen Teile | betrifft Anspruch |
|---|---|---|
| | **EINSCHLÄGIGE DOKUMENTE** | |
| X | GB - A - 1 367 764 (MASSEY-FERGUSON-PERKINS) <br> * ganzes Dokument * <br> -- | 1 |
| | DE - C - 851 738 (RUHRSTAHL) <br> * Anspruch 1; Fig. 1 * <br> -- | 1 |
| | DE - U - 1 711 759 (KOBER) <br> * Fig. 1 bis 10 * <br> -- | 2,3 |
| | DE - B - 2 154 281 (MERZ) <br> * Fig. 1, Positionen 6, 7 * <br> ---- | 6 |

**KLASSIFIKATION DER ANMELDUNG (Int.Cl.3)**

B 60 T 7/20
B 60 T 13/08

**RECHERCHIERTE SACHGEBIETE (Int. Cl.3)**

B 60 T 7/00
B 60 T 13/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie. übereinstimmendes Dokument

X | Der vorliegende Recherchenbericht wurde für alle Patentansprüche erstellt.

| Recherchenort | Abschlußdatum der Recherche | Prüfer |
|---|---|---|
| Berlin | 19-03-1980 | LUDWIG |

EPA form 1503.1 06.78